Europäisches Patentamt

(19) European Patent Office

Office européen des brevets

(11) Publication number: **0 007 149**
**B1**

(12) **EUROPEAN PATENT SPECIFICATION**

(45) Date of publication of patent specification: **09.12.81**

(51) Int. Cl.³: **B 29 D 3/02,** D 04 H 1/60

(21) Application number: **79300406.0**

(22) Date of filing: **14.03.79**

(54) **Methods of and apparatus for impregnating fibres with dry powdered resin to form a moulding composition, and fibre-reinforced composites moulded from such a composition.**

(30) Priority: **07.07.78 US 922608**

(43) Date of publication of application:
**23.01.80 Bulletin 80/2**

(45) Publication of the grant of the European patent:
**09.12.81 Bulletin 81/49**

(84) Designated Contracting States:
**DE GB NL**

(56) References cited:
**BE - A - 529 263**
**CH - A - 518 165**
**GB - A - 791 976**
**GB - A - 1 509 149**

(73) Proprietor: **THE BABCOCK & WILCOX COMPANY**
**1010 Common Street P.O. Box 60035**
**New Orleans, Louisiana 70160 (US)**

(72) Inventor: **Faverty, Delmar Allison**
**1725 Electon Road**
**Alliance Ohio 44601 (US)**
Inventor: **Shuck, Robert E.**
**1273 Glenview N.E.**
**North Canton Ohio 44721 (US)**

(74) Representative: **Cotter, Ivan John et al,**
**D. YOUNG & CO. 10 Staple Inn**
**London WC1V 7RD (GB)**

Courier Press, Leamington Spa, England.

# Methods of and apparatus for impregnating fibres with dry powdered resin to form a moulding composition, and fibre-reinforced composites moulded from such a composition

This invention relates to methods of and apparatus for impregnating fibres with dry powdered resin to form a moulding composition, and fibre-reinforced composites moulded from such a composition.

Fibre-reinforced resin composites are assemblies of fibres geometrically arranged within a resin matrix to obtain specific characteristics and properties. The overall properties of the composite are a function of many variables including the amount and type of fibre and matrix, the orientation and distribution of the fibre, the compositing technique, and the processing method utilised in fabricating the finished composite article.

In processes utilised to form composite articles having considerable and varying thickness and contours, it is desirable to utilise resin mouldings containing discontinuous fibres to obviate a need for subsequent machining.

In the past, fibrous tow or roving has been passed through a liquid resin composition, and dried and chopped to provide a mass of loose resin-coated fibre segments. Wet resin impregnation of the fibres, however, requires the availability of a suitable solvent for the matrix material. Moreover, it has been found that some of the fibre segments impregnated by the wet resin invariably cohere, requiring additional separation to optimise strength in the finished article. Wet impregnation also often requires the maintenance of resin bath levels or heating to maintain proper viscosity of the bath, or both, and subsequent drying.

Dry impregnation or the mixing of discontinuous fibres with dry resin powders is likewise subject to difficulties. Powdered resins and fibres may be mixed in an apparatus such as a tumbler or blender. However, in such apparatus the fibres tend to remain in discrete bundles resisting powdered resin penetration, and resulting in a non-homogenous mixture. Moulding compositions prepared by such mixing techniques are necessarily produced by batching operations rather than by continuous production techniques.

Applications of dry resin to continuous fibre tows generally requires *in-situ* heating to ensure coherence between the fibre and resin. GB—A—791796 is illustrative of such a technique, in that it discloses a method of and apparatus for impregnating fibres with dry powdered resin in which fluidised fibres are dispersed and passed into a mixing chamber and dry powdered resin is injected into the mixing chamber so as to impregnate the fluidising fibres with the powdered resin, heating devices being employed to set or cure the resin on assembled fibres of a preform on a matrix in the mixing chamber. Heating, however, may not be desirable or practical.

Such techniques may not result in a uniform fibre-resin distribution.

Furthermore, preliminary process conditioning such as solvenating and heating may either limit the materials which can be utilised, or adversely affect the desired properties of the ultimate composite application.

An object of this invention is to provide methods and apparatus for impregnating fibres with dry powered resin to form moulding compositions, without the need for *in-situ* process conditioning.

According to the invention there is provided a method of impregnating fibres with dry powdered resin to form a fibrous moulding composition, wherein fluidised fibres are dispersed and passed into a mixing chamber and dry powdered resin is injected into the mixing chamber so as to impregnate the fluidised fibres with the powdered resin, characterised in that the fluidised fibres are conveyed through a flow accelerating device prior to the dispersal and passage of the fluidised fibres into the mixing chamber.

The invention also provides a fibre-reinforced composite moulded from a fibrous moulding composition formed by the above method.

The invention further provides apparatus for impregnating fibres with dry powdered resin to form a moulding composition, the apparatus comprising a mixing chamber, means for directing fluidised fibres into the mixing chamber, dispersal means for dispersing the fluidised fibres into the mixing chamber, a receptacle containing or capable of containing a supply of dry powdered resin and in communication with the mixing chamber, and injection means for injecting the resin into the mixing chamber to impregnate the fluidised fibres therein, characterised by a flow accelerating device disposed upstream of the mixing chamber in the direction of flow of the fluidised fibres such that, in use the fluidised fibres are conveyed through the flow accelerating device.

In preferred embodiments of the invention described in more detail below, discontinuous fibres of a chopped tow are fluidised and pneumatically conveyed through a first flow accelerating device. The accelerated fluidised fibres are conveyed into and dispersed within an enlarged mixing chamber. A resin filled hopper disposed in communication with the mixing chamber injects a metered rate of the dry powdered resin into the chamber, causing the fluidised fibres to admix with the powdered resin. A second flow accelerating device withdraws fluidised amounts of the fibres, now impregnated with the powdered resin, preferably at a flow rate greater than that at which the fibres are conveyed into the chamber, resulting in increased turbulence and a slightly negative pressure at the outlet of the chamber. The second flow accelerating device converges and accelerates the impregnated fibres and discharges the mixture into a separating tank from which the gaseous fluidising medium is vented and the resin-impregnated fibre is collected.

The invention will now be further described, by way of non-limitative example, with reference to the accompanying diagrammatic drawings, in which the reference numerals designate like or corresponding parts throughout, and in which:

Figure 1 is a schematic front elevational view of apparatus embodying the invention for forming a fibrous moulding composition;

Figure 1A is an enlarged view of part of Figure 1;

Figure 2 is a side elevation of the apparatus illustrated in Figure 1;

Figure 3 is a front elevational view of an alternative apparatus embodying the invention, for forming a fibrous moulding composition, and schematically illustrating a flow pattern within a part of the apparatus; and

Figure 4 is a side elevation of the apparatus illustrated in Figure 3.

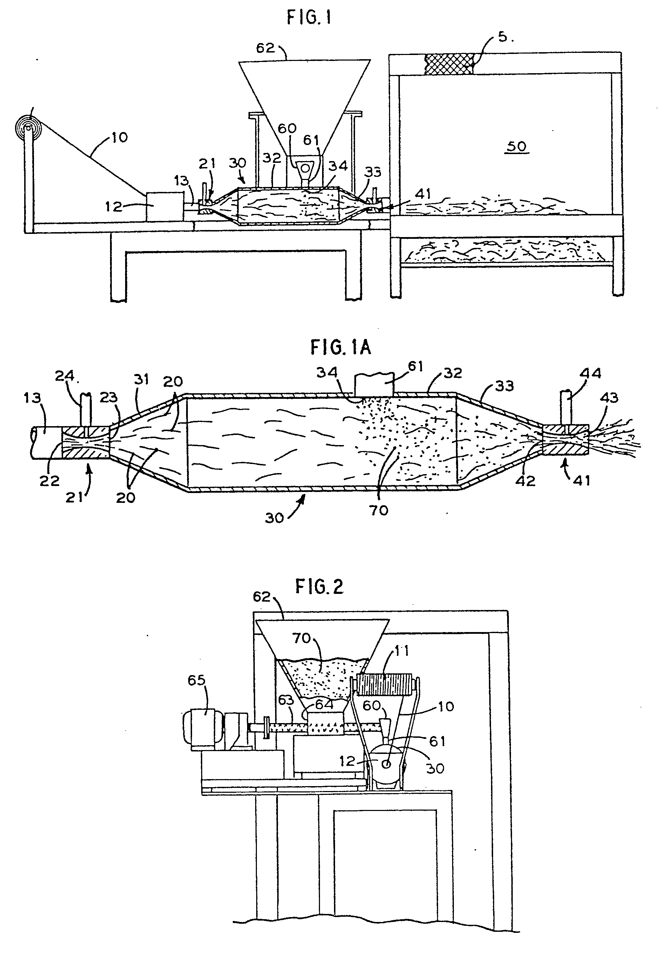

Figures 1, 1A and 2 illustrate a preferred form of apparatus embodying the invention. A continuous fibre tow 10, wound on a spool 11, extends from the spool 11 into an adjustable chopping device 12. The chopping device 12 includes known means for drawing the tow 10 from the spool 11 and means for chopping the tow 10 into discontinuous segments. Chopped fibres 20 are withdrawn from the chopping device 12, via an outlet conduit 13, by a first flow accelerating device or flow amplifier 21, such as an ejector or venturi. The flow accelerating device 21 has a suction inlet 22 connected to the outlet conduit 13, a discharge outlet 23 and a pressure inlet 24. The pressure inlet 24 is connected to a pressure source of gaseous motive fluid (not shown), typically compressed air. The discharge outlet 23 is disposed in close fluid communication with a mixing chamber 30.

The mixing chamber 30 is provided with a generally tapered diffuser inlet 31 attached to an enlarged shell 32 and followed by a generally tapered converging outlet 33. The wall of the shell 32 is penetrated by an opening 34. The extremity of the converging outlet 33 is juxtaposed in fluid communication with a suction inlet 42 of a second flow accelerating device or flow amplifier 41 having a discharge outlet 43, and a pressure inlet 44 connected to a motive fluid pressure source (not shown). The discharge outlet 43 of the flow accelerating device 41 leads to a separating tank 50 which includes filter venting means 51.

A receptacle, preferably a hopper 60 as shown, is disposed superjacent to the mixing chamber 30. An outlet 61 connects the hopper 60 to the opening 34 in the wall of the sheel 32 of the mixing chamber. The hopper 60 is preferably connected, as shown, a larger storage hopper 62 via a screw conveyor 63. The screw conveyor 63 is driven by known means such as a drive motor 65. An agitating device 64, such as a vibratory motor, is connected to the storage hopper 62 for ensuring uninterrupted flow of powdered resin 70 which is stored in the storage hopper 62.

In operation, continuous fibre tow 10 is drawn from the spool 11 into the chopping device 12 and chopped into discontinuous chopped fibre 20. The chopped fibre 20 is withdrawn from the chopping device 12 by the suction generated in the first flow accelerating device 21 due to the motive power of a high pressure stream of motive fluid directed through the pressure inlet 24. The motive fluid is a gas, preferably air. The motive fluid entrains and fluidises the chopped fibre 20 and discharges a fluidised stream of chopped fibre into the mixing chamber 30. As the fluidised fibre 20 is conveyed through the diffuser inlet 31, its velocity is reduced, and the fibres are randomly expanded and thoroughly dispersed within the turbulent fluid stream.

Powdered resin 70, previously loaded into the storage hopper 62, is concurrently fed into the screw conveyor 63 which conveys it to the hopper 60. Powdered resin 70 is metered from the hopper 60 into the mixing chamber 30 and intimately mixed with the dispersed fibre.

A continuous stream of resin-impregnated fibre is drawn out of the mixing chamber 30 via the converging outlet 33 by the second flow accelerating device 41. The first and second flow accelerating devices 21, 41 are preferably selected, arranged and operated such that a slight vacuum is maintained about the perimeter of the mixing chamber 30. As the pneumatically conveyed impregnated fibre is removed from the mixing chamber 30, it is further accelerated by the second flow accelerating device 41, and then discharged into the separating tank 50. The separating tank 50 is sized so as to dissipate the velocity of the mixture, allowing the resin-impregnated fibre to settle in the tank. The conveying motive fluid vents through the filter venting means 51. The composition of fibre reinforced resin is removed from the separating tank 50 for further processing, such as staging and moulding.

It has been found that operation as described effectively explodes a mass of chopped fibre 20 as it is discharged from the first accelerating device 21 into the mixing chamber 30, exposing the surfaces of the individual fibres to the powdered resin 70 which falls into the mixing chamber. Within the shell 32 recirculation and spiralling causes further admixing and adherence of the fibre and resin.

In this preferred embodiment, the agitating device 64 is utilised to agitate the powdered resin 70 within the storage hopper 62 so as to preclude caking or lumping, to break up material bridges and assist flow of the resin from the storage hopper 62.

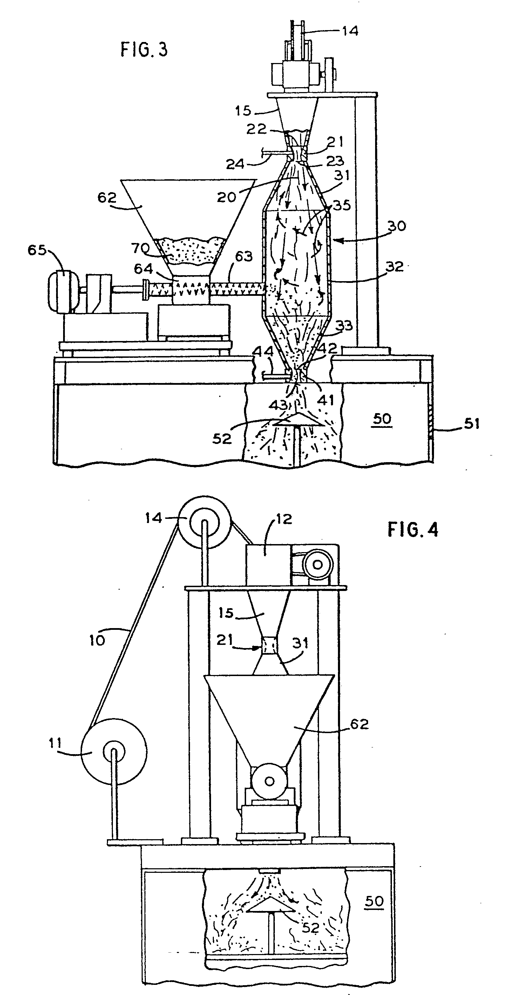

An alternative preferred apparatus embodying the invention for making a fibrous moulding composition is illustrated in Figures 3 and 4. The apparatus of Figures 3 and 4 is in many respects similar to that of Figures 1, 1A and 2 and the following description of the apparatus of Figures 3 and 4 is therefore mainly restricted to the features by which it differs from the apparatus of Figures 1, 1A and 2. As shown in Figure 3, powdered resin 70 stored in the storage hopper 62 is directly conveyed into the mixing chamber 30 by the screw conveyor 63. As shown in Figure 4, fibrous tow 10 is drawn from the spool 11, over an idler roller 14 and into the chopping device 12. The fiber tow 10 is chopped into discontinuous segments 20 within the chopping device 12 and discharged into a tapered conduit 15 situated below the chopping device.

The tapered conduit 15 is disposed in fluid communication with the suction inlet 22 of the first flow accelerating device 21. Motive fluid (not shown) entrains the chopped fibre 20 and discharges it into the mixing chamber 30 which, in the case of Figures 3 and 4, is vertically oriented. The second flow accelerating device 41 withdraws resin-impregnated fibre from the converging outlet 33 of the mixing chamber 30 and discharges it into the separating tank 50.

Figures 3 and 4 schematically illustrate turbulent flow currents 35 generated in the mixing chamber 30 within an arrangement of the type shown.

It is preferred that the half-angle of the diffuser inlet 31 be sized relative to the discharge flow configuration of the first flow accelerating device 21 such that a low pressure area is created outside of the discharge cone or outlet 33. Thus, if the discharge cone 33 from the accelerating device 21 has, for example, a half-angle of approximately 7 degrees, a diffuser inlet taper having a half-angle of 30 degrees will produce a spiral flow pattern similar to that illustrated. The flow pattern is such that the fibres discharged from the flow accelerating device 21 spread apart within the chamber 30 and a counterflow spiral recirculation of part of the mixture is initiated. The fluidised mixture is withdrawn by the second flow acclerating device or amplifier 41. Ejection through the second air flow amplifier 41 further expands, the fibre-resin mixture, which discharges into the separating tank 50. A conical distribution baffle 52 may be arranged within the separating tank 50 to evenly distribute the resin impregnated fibres.

It has been found that the vertical orientation of the mixing chamber 30 results in a more efficient mixing action relative to a horizontal orientation, which may result in powdered resin sticking to the side of the chamber.

The following is further illustrated by, but not limited to, the following example:

Example

A continuous flow of graphite fibre, marketed under the designation PANEX 30C by the Stackpole Fibers Company, a subsidiary of Stackpole Carbon Company, Lowell, Massachusetts, U.S.A., was used in this example. The tow consisted of 160,000 individual filaments, with each filament having a diameter of 7 to 9 microns. A powdered polyphenylene sulphide (PPS) resin, marketed by the Phillips Petroleum Company, Bartlesville, Oklahoma, U.S.A. as RYTON V-1 resin, was used. The powdered resin had an average particle size of 5 microns. PPS resin has a high melting point of 228°C (550°F) and no known solvents below 204°C (400°F).

The graphite tow was mechanically drawn from a spool at a rate of approximately 274 mm/s (54 ft/min) by a Finn and Fram Model 80 chopper and chopped into 25.4 mm (1 inch) lengths. The chopped fibre tow was pneumatically withdrawn from the chopper by a first TRANSVECTOR AIR flow amplifier (produced by the Vortec Corporation, Cincinnati, Ohio, U.S.A.), pneumatically fluidised, and physically expanded as it was pneumatically conveyed into a mixing chamber. Based on manufacturer literature it is believed that the fluidised fibre is accelerated to approximately 335 m/s (1100 ft/s) in the Transvector device. The powdered PPS resin was metered directly into the mixing chamber from a superjacent hopper via a Vibra-screw Model SCR-20 powder feeder. The chopped fibre was separated and blown apart, and continuously mixed with the powdered resin in the mixing chamber by the vortex currents formed with the turbulent air flow. The mixture was drawn from the bottom of the chamber by a second Transvector air flow amplifier.

The moulding compound mixture was further accelerated by the second air flow amplifier or flow accelerating device and then discharged into a separating tank having a large filter. The flow decelerated allowing the resin-impregnated fibres to settle to the bottom of the tank while the conveying air medium vented through the filter. The feed rates of the fibre and resin were regulated to produce a moulding compound having a fibre content of 36.64 weight percent of the fibre and resin mixture.

Graphite and fibreglass fibres have actually been used in producing moulding compounds in accordance with the above disclosure. The number and diameter of the fibre in a tow are not critical. Tows ranging from 3,000 to 160,000 filaments have been used with equal success. The powdered resin should be fine enough to surround and adhere to individual filaments. It is found that high relative humidity in the range of 85 or 100 percent causes the fibres to clin together and resist separation. Blends of different powdered resin have been utilised with satisfactory results.

The techniques described herein have been found to shorten material preparation time and improve the quality and consistency of the coating in comparison to tumbling or blending methods of dry impregnation. The improved coating and uniformity of the moulding compound results in the ability to produce a comparatively higher strength moulded product having fewer internal defects. The method disclosed herein may be operated as either a continuous or batching process.

Fibrous moulding compositions formed by the methods embodying the invention display a uniform fibre and resin distribution. Coherence between the resin and the fibre moulding compound is retained for long periods without further processing. It will be noted that the dry powdered resins utilised herein are not in a tacky or sticky state.

The percentage of fibres relative to the resin may be varied to optimise strength, impact resistance, surface finish and other properties needed for specific composite applications.

As used in the description and claims the term 'fluidised' will be understood to connote the movement of particulate matter, either fibre or resin or both as modified in the context of the term's usage, conveyed or transported by a gaseous medium. Transport of particulate matter in a liquid phase is outside the scope of the present invention. The term 'fluid communication' will be understood to denote means for passage of fluid or fluidised matter between components.

It will be evident to those skilled in the art that various alterations and changes may be made to the exemplary apparatuses disclosed above without departing from the scope of the invention. For example, the shell of the mixing chamber may be cylindrical, in which case the diffuser inlet and converging outlet of the chamber will be generally conical or funnel shaped. The shell could alternatively have rectangular or square sides, in which case the diffuser inlet and converging outlet might be tapered rectangular or square members.

**Claims**

1. A method of impregnating fibres with dry powdered resin to form a fibrous moulding composition, wherein fluidised fibres (20) are dispersed and passed into a mixing chamber (30) and dry powdered resin (70) is injected into the mixing chamber so as to impregnate the fluidised fibres with the powdered resin, characterised in that the fluidised fibres (20) are conveyed through a flow accelerating device (21) prior to the dispersal and passage of the fluidised fibres into the mixing chamber (30).

2. A method according to claim 1, comprising the step of passing the resin-impregnated fluidised fibres through a second flow accelerating device (41).

3. A method according to claim 2, comprising decelerating the resin-impregnated fluidised fibres after they have passed through the second flow accelerating device (41).

4. A method according to claim 1, claims 2 or claim 3, wherein at least part of the mixing chamber (30) is operated at a negative pressure.

5. A method according to any one of the preceding claims, comprising the step of chopping (12) continuous fibrous tow (10) into discontinuous chopped fibres.

6. A method according to claim 5, wherein the discontinuous chopped fibres are fluidised (24) to form said fluidised fibres (20).

7. A method according to claim 6, wherein the fibres are pneumatically fluidised.

8. A method according to any one of the preceding claims, comprising the step of separating (50) the resin-impregnated fibres from the fluidising medium.

9. A method according to any one of the preceding claims, wherein the fibres are graphite fibres.

10. A method according to any one of the preceding claims, wherein the resin is polyphenylene sulphide resin.

11. A method according to any one of the preceding claims, comprising dispersing and decelerating the fluidised fibres in the mixing chamber (30).

12. A fibre-reinforced composite moulded from a fibrous moulding composition formed by a method according to any one of the preceding claims.

13. Apparatus for impregnating fibres with dry powdered resin to form a moulding composition, the apparatus comprising a mixing chamber (30), means for directing fluidised fibres (20) into the mixing chamber, dispersal means for dispersing the fluidised fibres into the mixing chamber (30), a receptacle (60, 62) containing or capable of containing a supply of the dry powdered resin (70) and in communication with the mixing chamber, and injection means for injecting the resin (70) into the mixing chamber (30) to impregnate the fluidised fibres (20) therein, characterised by a flow accelerating device (21) disposed upstream of the mixing chamber (30) in the direction of flow of the fluidised fibres (20) such that, in use, the fluidised fibres are conveyed through the flow accelerating device.

14. Apparatus according to claim 13, comprising a second flow accelerating device (41) in fluid communication with the mixing chamber (30) for withdrawing resin-impregnated fibres from the mixing chamber.

15. Apparatus according to claim 14, wherein the dispersal means is operative to decelerate and disperse the fluidised fibres (20) within the mixing chamber (30).

16. Apparatus according to claim 15, wherein the dispersal means includes a generally tapered diffuser inlet (31) to the mixing chamber (30) disposed to receive discharge flow from the first-mentioned flow accelerating device (21).

17. Apparatus according to claim 16, wherein the mixing chamber (30) is generally cylindrical and the diffuser inlet (31) is generally conical.

18. Apparatus according to claim 17, wherein the mixing chamber includes a generally conical outlet (33) juxtaposed in fluid communication with the second flow accelerating device (41).

19. Apparatus according to any one of claims 13 to 18, comprising means for fluidising the fibres, said means including the first-mentioned flow accelerating device (21).

20. Apparatus according to any one of claims 13 to 19, wherein the injection means is operative to inject a metered flow of the resin into the mixing chamber (30).

**Revendications**

1. Procédé d'imprégnation de fibres avec une résine en poudre sèche pour former une composition fibreuse à mouler, dans lequel on disperse et fait passer des fibres fluidisées (20) dans une chambre de mélange (30) et on injecte une résine en poudre sèche (70) dans la chambre de mélange pour imprégner les fibres fluidisées de la résine en poudre, caractérisé en ce que l'on conduit les fibres fluidisées (20) à travers un dispositif d'accélération de l'écoulement (21) avant la dispersion et le passage des fibres fluidisées dans la chambre de mélange (30).

2. Procédé selon la revendication 1, comprenant un stade de passage des fibres fluidisées imprégnées de résine à travers un second dispositif d'accélération de l'écoulement (41).

3. Procédé selon la revendication 2, comprenant le ralentissement des fibres fluidisées imprégnées de résine après qu'elles aient passé à travers le second dispositif d'accélération de l'écoulement (41).

4. Procédé selon l'une des revendications 1, 2 ou 3, dans lequel on fait fonctionner au moins une partie de la chambre de mélange (30) sous une pression négative.

5. Procédé selon l'une quelconque des revendications précédentes, comprenant le stade de découpe (12) d'un câble fibreux continu (10) en fibres coupées discontinues.

6. Procédé selon la revendication 5 dans lequel les fibres coupées discontinues sont fluidisées (24) pour former lesdites fibres fluidisées (20)

7. Procédé selon la revendication 6 dans lequel les fibres sont fluidisées par voie pneumatique.

8. Procédé selon l'une quelconque des revendications précédentes, comprenant le stade de séparation (50) des fibres imprégnées de résine, du milieu de fluidisation.

9. Procédé selon l'une quelconque des revendications précédentes, dans lequel les fibres sont des fibres de graphite.

10. Procédé selon l'une quelconque des revendications précédentes dans lequel la résine est une résine de sulfure de polyphénylène.

11. Procédé selon l'une quelconque des revendications précédentes, comprenant la dispersion et le ralentissement des fibres fluidisées dans la chambre de mélange (30).

12. Composite renforcé par des fibres, moulé à partir d'une composition à mouler fibreuse formée selon le procédé de l'une quelconque des revendications précédentes.

13. Appareil pour imprégner des fibres d'une résine en poudre sèche pour former une composition à mouler, cet appareil comprenant une chambre de mélange (30), un dispositif pour diriger des fibres fluidisées (20) dans la chambre de mélange, un dispositif de dispersion pour disperser les fibres fluidisées dans la chambre de mélange (30), un récipient (60, 62) contenant ou capable de contenir une alimentation de résine en poudre sèche (70) et en communication avec la chambre de mélange, et un dispositif d'injection pour injector la résine (70) dans la chambre de mélange (30) pour y imprégner les fibres fluidisées (20), caractérisé par un dispositif d'accélération de l'écoulement (21) disposé en amont de la chambre de mélange (30) dans la direction d'écoulement des fibres fluidisées (20) pour que lors de l'emploi les fibres fluidisées soient conduites à travers le dispositif d'accélération de l'écoulement.

14. Appareil selon la revendication 13, comprenant un second dispositif (41) d'accélération de l'écoulement permettant la communication des fluides avec la chambre de mélange (30) pour évacuer les fibres imprégnées de résine de la chambre de mélange.

15. Appareil selon la revendication 14, dans lequel le dispositif de dispersion ralentit et disperse les fibres fluidisées (20) dans la chambre de mélange (30).

16. Appareil selon la revendication 15, dans lequel le dispositif de dispersion comporte une entrée de diffuseur généralement évasée (31) dans la chambre de mélange (30) disposée pour recevoir le courant effluent du dispositif d'accélération de l'écoulement (21) précité.

17. Appareil selon la revendication 16, dans lequel la chambre de mélange (30) est généralement cylindrique et l'entrée de diffuseur (31) est généralement conique.

18. Appareil selon la revendication 17, dans lequel la chambre de mélange comporte une sortie (33) généralement conique juxtaposée de façon à permettre la communication des fluides avec le second dispositif d'accélération de l'écoulement (41).

19. Appareil selon l'une quelconque des revendications 13 à 18, comportant un dispositif pour fluidiser les fibres, ce dispositif comprenant le dispositif d'accélération de l'écoulement (21) précité.

20. Appareil selon l'une quelconque des revendications 13 à 19, dans lequel le dispositif d'injection permet d'injecter un courant mesuré de la résine dans la chambre de mélange (30).

## Patentansprüche

1. Verfahren zur Imprägnierung von Fasern mit trockenem pulverisiertem Harz unter Bildung einer faserigen Formmasse, bei dem man fluidisierte Fasern (20) fein verteilt und in eine Mischkammer (30) überführt und trockenes pulverisiertes Harz (70) in die Mischkammer derart einspritzt, daß die fluidisierten Fasern mit dem pulverisierten Harz imprägniert werden, dadurch gekennzeichnet, daß die fluidisierten Fasern (20) durch eine Strömungsbeschleunigungseinrichtung (21) befördert werden, bevor sie fein verteilt und in die Mischkammer (30) überführt werden.

2. Verfahren nach Anspruch 1 mit der Stufe eines Hindurchführens der harzimprägnierten fluidisierten Fasern durch eine zweite strömungsbeschleunigende Einrichtung (41).

3. Verfahren nach Anspruch 2 mit einer Verzögerung der harzimprägnierten fluidisierten Fasern, nachdem sie durch die zweite strömungsbeschleunigende Einrichtung (41) geführt wurden.

4. Verfahren nach Anspruch 1, Anspruch 2 oder Anspruch 3, worin wenigstens ein Teil der Mischkammer (30) bei einem negativen Druck betrieben wird.

5. Verfahren nach einem der vorausgehenden Ansprüche mit der Stufe eines Zerhackens (12) eines kontinuierlichen Faserstranges (10) in diskontinuierliche zerhackte Fasern.

6. Verfahren nach Anspruch 5, worin die diskontinuierlichen zerhackten Fasern unter Bildung der fluidisierten Fasern (20) fluidisiert (24) werden.

7. Verfahren nach Anspruch 6, worin die Fasern pneumatisch fluidisiert werden.

8. Verfahren nach einem der vorausgehenden Ansprüche mit der Stufe einer Abtrennung (50) der harzimprägnierten Fasern von dem Fluidisiermedium.

9. Verfahren nach einem der vorausgehenden Ansprüche, bei dem die Fasern Graphitfasern sind.

10. Verfahren nach einem der vorausgehenden Ansprüche, bei dem das Harz Polyphenylensulfidharz ist.

11. Verfahren nach einem der vorausgehenden Ansprüche unter feiner Verteilung und Verzögerung der fluidisierten Fasern in der Mischkammer (30).

12. Faserverstärkter Formling aus einem faserigen Formmasse, die nach einem Verfahren nach einem der vorausgehenden Ansprüche gebildet wurde.

13. Vorrichtung zur Imprägnierung von Fasern mit trockenem pulverisiertem Harz unter Bildung einer Formmasse mit einer Mischkammer (30), Einrichtungen zur Überführung fluidisierter Fasern (20) in die Mischkammer, Feinverteilungseinrichtungen zur feinen Verteilung der fluidisierten Fasern für die Mischkammer (30), einem Behältnis (60; 62), das einen Vorrat des trockenen pulverisierten Harzes (70) enthält oder enthalten kann und in Verbindung mit der Mischkammer steht, und Einspritzeinrichtungen für das Einspritzen des Harzes (70) in die Mischkammer (30) zur Imprägnierung der fluidisierten Fasern (20) darin, gekennzeichnet durch eine Strömungsbeschleunigungseinrichtung (21), die aufstromwärts von der Mischkammer (30) in der Strömungsrichtung der fluidisierten Fasern (20) derart angeordnet ist, daß die fluidisierten Fasern bei der Verwendung durch die Strömungsbeschleunigungseinrichtung befördert werden.

14. Vorrichtung nach Anspruch 13 mit einer zweiten Strömungsbeschleunigungseinrichtung (41) in Fließmittelverbindung mit der Mischkammer (30) für das Abziehen von harzimprägnierten Fasern aus der Mischkammer.

15. Vorrichtung nach Anspruch 14, worin die Feinverteilungseinrichtung so arbeitet, daß sie die fluidisierten Fasern (20) in der Mischkammer (30) verzögert und fein verteilt.

16. Vorrichtung nach Anspruch 15, worin die Feinverteilungseinrichtung einen allgemein sich verjüngenden Diffusoreinlaß (31) zu der Mischkammer (30) besitzt, welche so angeordnet ist, daß sie aus der ersterwähnten Strömungsbeschleunigungseinrichtung (21) austretende Strömung aufnimmt.

17. Vorrichtung nach Anspruch 16, worin die Mischkammer (30) allgemein zylindrisch und der Diffusoreinlaß (31) allgemein kegelförmig ausgebildet ist.

18. Vorrichtung nach Anspruch 17, worin die Mischkammer einen allgemein kegelförmigen Auslaß (33) besitzt, der in Fließmittelverbindung an die zweite Strömungsbeschleunigungseinrichtung (41) angeschlossen ist.

19. Vorrichtung nach einem der Ansprüche 13 bis 18 mit Einrichtungen zur Fluidisierung der Fasern, wobei diese Einrichtungen die ersterwähnte Strömungsbeschleunigungseinrichtung (21) einschließen.

20. Vorrichtung nach einem der Ansprüche 13 bis 19, worin die Einspiritzeinrichtung so arbeitet, daß sie eine zugemessene Strömungsmenge des Harzes in die Mischkammer (30) einspritzt.

0 007 149

FIG. 1

FIG. 1A

FIG. 2

1

FIG. 3

FIG. 4